# EUROPEAN PATENT APPLICATION

(11) **EP 4 539 289 A1**
(43) Date of publication of application: **16.04.2025**
(21) Application number: 23819562.2
(22) Date of filing: 09.05.2023
(51) Int. Cl.: H02J 3/01, H02J 50/12, H02J 50/40

(54) **POWER OUTPUT CIRCUIT AND CONTACTLESS POWER SUPPLY SYSTEM**

(30) Priority: 07.06.2022 JP 2022092228
(71) Applicant: DENSO CORPORATION, Kariya-city, Aichi 448-8661 (JP)
(72) Inventor: TAKAHASHI, Masaya, Kariya-city, Aichi 4488661 (JP); NAKAYASHIKI, Yusei, Kariya-city, Aichi 4488661 (JP); SHIBANUMA, Mitsuru, Kariya-city, Aichi 4488661 (JP); YAMAGUCHI, Nobuhisa, Kariya-city, Aichi 4488661 (JP)
(74) Representative: TBK
(86) International application number: PCT/JP2023/017395
(87) International publication number: WO 2023/238576

(57) **Abstract**

A power output circuit (OC1) includes a plurality of circuit blocks (30) that are provided in power wirings (WP1, WP2) to which power is inputted and connected to each other side by side. Each of the plurality of circuit blocks includes at least a filter (16) in a last post-stage. Each of the plurality of filters includes a reactor (L1) and a capacitor (C1) connected to the reactor at a node differing from an output node (Nout). Either of the reactor and the capacitor provided in each of the plurality of filters is connected to the power wirings in series so as to connect with the output node. A connection line between the reactor and the capacitor in one filter is connected to a connection line between the reactor and the capacitor in the remaining other filter.

## Description

### [Cross-Reference to Related Application]

The present application is based on and claims the benefit of priority from Japanese Patent Application No. 2022-92228, filed on June 7, 2022, the description of which is incorporated herein by reference.

### [Technical Field]

The present disclosure relates to a power output circuit and a contactless power supply system.

### [Background Art]

Conventionally, a filter circuit is used in a power transmission line to obtain a target frequency component or the like. For example, in PTL 1, a filter circuit for suppressing harmonic noise is used in a power transmission apparatus that is used for contactless power supply.

### [Citation List]

### [Patent Literature]

[PTL 1] JP 2016-025771 A

### [Summary]

Incidentally, a new power transmission line including a filter circuit being added in parallel to a power transmission line including a filter circuit that is already installed can be considered in order to increase power supplied to a load on the power transmission line that is already installed. In this case, when variations occur in element characteristics such as inductance and capacitance of electronic elements such as reactors and capacitors used in the filter circuits, an output current of the filter circuit may become imbalanced among a plurality of filter circuits and power loss may increase. Such issues may also arise not only in cases in which power transmission lines including a power source are connected in parallel, but also in cases in which only filter circuits are connected in parallel.

The present disclosure can be implemented according to the following aspects.

An aspect of the present disclosure provides a power output circuit. The power output circuit includes a plurality of circuit blocks that are provided in power wirings to which power is inputted and connected to each other side by side. Each of the plurality of circuit blocks includes at least a filter in a last post-stage. Each of the plurality of filters includes a reactor and a capacitor connected to the reactor at a node differing from an output node. Either of the reactor and the capacitor provided in each of the plurality of filters is connected to the power wirings in series so as to connect with the output node. A connection line between the reactor and the capacitor in one filter is connected to a connection line between the reactor and the capacitor in the remaining other filter.

As a result of the power output circuit according to this aspect, connection lines of the plurality of filters are connected. Therefore, variations in a current value and transient characteristics of an output current of the filters can be suppressed. Consequently, increase in power loss in the reactor and the capacitor due to current imbalance attributed to element characteristics of the reactor and the capacitor can be suppressed.

### [Brief Description of Drawings]

The above-described object, other objects, characteristics, and advantages of the present disclosure will be further clarified through the detailed description herebelow, with reference to the accompanying drawings. The drawings are as follows:
Fig. 1 is a circuit diagram of a power output circuit according to a first embodiment;
Fig. 2 is a circuit diagram of a power output circuit according to a second embodiment;
Fig. 3 is a circuit diagram of a power output circuit according to a third embodiment;
Fig. 4 is a circuit diagram of a contactless power supply system according to a fourth embodiment;
Fig. 5 is a circuit diagram of a contactless power supply system according to a fifth embodiment;
Fig. 6 is a circuit diagram of a contactless power supply system according to a sixth embodiment;
Fig. 7 is a circuit diagram of a contactless power supply system according to a seventh embodiment;
Fig. 8 is a circuit diagram of a contactless power supply system according to an eighth embodiment; and
Fig. 9 is a circuit diagram of a contactless power supply system according to a ninth embodiment.

### [Description of Embodiments]

### A. First embodiment

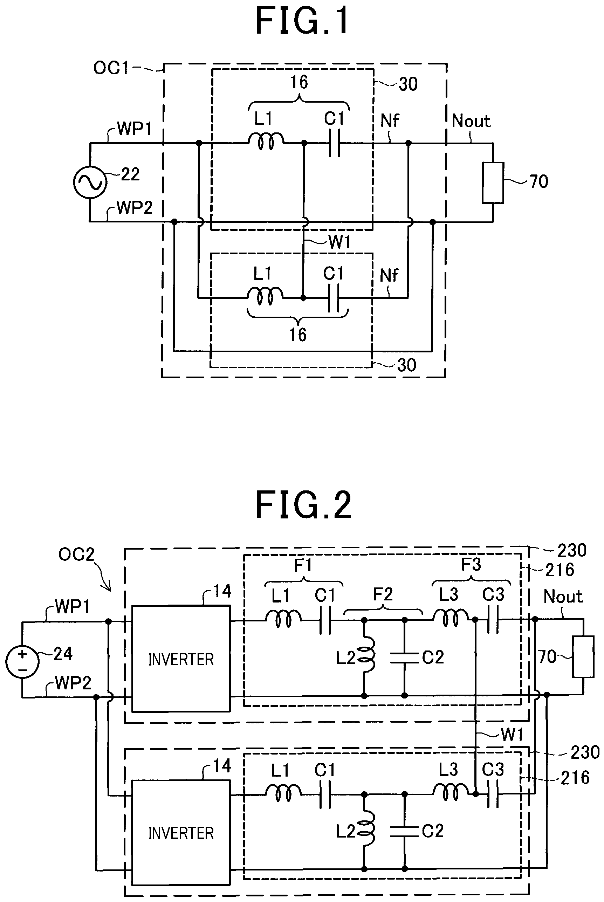

As shown in Fig. 1, a power output circuit OC1 is interposed between an alternating current power supply 22 and a load 70 to which power is supplied from the alternating current power supply 22. Specifically, the power output circuit OC1 includes two circuit blocks 30 that are provided in a first power wiring WP1 and a second power wiring WP2 that serve as power wirings to which alternating current power outputted from the alternating current power supply 22 is inputted, and are connected to each other side by side. Specifically, the two circuit blocks 30 are connected to each other in parallel. According to the present embodiment, each circuit block 30 includes a filter 16.

According to the present embodiment, the filter 16 is a bandpass filter configured by a first reactor L1 and a first capacitor C1 connected in series. The filter 16 suppresses passage of noise components and allows passage of signals in a target frequency band.

The first reactor L1 and the first capacitor C1 are connected to the first power wiring WP1 in series. Specifically, one terminal of the first capacitor C1 is connected to an output node Nout of the power output circuit OC1, and another terminal is connected to one terminal of the first reactor L1 at a node differing from the output node Nout. Another terminal of the first reactor L1 is connected to one terminal of the alternating current power supply 22. A connection line between the first reactor L1 and the first capacitor C1 in one filter 16 is connected to a connection line between the first reactor L1 and the first capacitor C1 in the remaining other filter 16. That is, the connection lines between the first reactor L1 and a second capacitor C2 of the two filters 16 are connected by a wiring W1. As a result, a potential difference between the connection lines can be eliminated. Therefore, even in cases in which variations occur in the inductance of the first reactor L1 and the capacitance of the first capacitor C1, variations in a current value and transient characteristics of an output current that is a current of an output node Nf of each filter 16 can be suppressed. Consequently, increase in loss in the first reactor L1 and the first capacitor C1 due to current imbalance caused by variations in the element characteristics of the first reactor L1 and the first capacitor C1, specifically, inductance and capacitance of the first reactor L1 and the first capacitor C1, can be suppressed.

Here, the inventors have confirmed, through simulation, that the imbalance between the two filters 16 in the output currents of the filters 16 is suppressed by the connection lines between the first reactor L1 and the second capacitor C2 being connected. In addition, the inventors have confirmed, through simulation, characteristics indicating a relationship between frequency and an amount of attenuation even in cases in which the connection lines between the first reactor L1 and the second capacitor C2 are connected, and have confirmed no reduction in filter performance. Therefore, as a result of the connection lines between the first reactor L1 and the second capacitor C2 being connected, current imbalance between the filters in the output current can be suppressed without reduction in filter performance.

According to the first embodiment described above, the power output circuit OC1 includes two filters 16, and the connection lines between the first reactor L1 and the second capacitor C2 of each filter 16 are connected by the wiring W1. Therefore, even in cases in which the element characteristics of the first reactor L1 and the first capacitor C1 vary, variations in the current value and transient characteristics of the output current of each filter 16 can be suppressed. Consequently, increase in loss in the first reactor L1 and the first capacitor C1 due to current imbalance caused by the variations in the element characteristics of the first reactor L1 and the first capacitor C1 can be suppressed.

### B. Second embodiment

As shown in Fig. 2, a circuit block 230 provided in a power output circuit OC2 according to a present embodiment including an inverter 14 in addition to a filter 216 differs from the first embodiment. In addition, whereas the filter 16 according to the first embodiment is a bandpass filter, the filter 216 according to the present embodiment is a combination filter of a bandpass filter and a band elimination filter. Configurations identical to those according to the first embodiment are given the same reference numbers. Detailed descriptions are omitted as appropriate.

The power output circuit OC2 according to the present embodiment includes two circuit blocks 230 that are provided in the first power wiring WP1 and the second power wiring WP2 to which alternating current power outputted from a direct current power supply 24 is inputted, and are connected to each other in parallel. According to the present embodiment, the circuit block 230 includes the inverter 14 and the filter 216. The filter 216 is disposed in a last post-stage of the circuit block 230. Here, a post-stage means a downstream side in a direction of a flow of power, in which a power supply such as the alternating current power supply 22 is upstream and a load such as the load 70 to which power is supplied is downstream. This similarly applies to a pre-stage described hereafter. That is, the pre-stage means the upstream side in the direction of the flow of power.

The inverter 14 converts direct current power outputted from the direct current power supply 24 to alternating current power. The filter 216 suppresses passage of noise components of the inputted alternating current power and allows passage of signals in a target frequency band. The filter 216 is configured such that a first filter unit F1 that is a bandpass filter, a second filter unit F2 that is a band elimination filter, and a third filter unit F3 that is a bandpass filter are connected in this order. The first filter unit F1 is configured by a connection body in which a first reactor L1 and a first capacitor C1 are connected in series being inserted in the first power wiring WP1 in series. The second filter unit F2 is configured by a connection body in which a second reactor L2 and a second capacitor C2 are connected to each other in parallel being connected to the direct current power supply 24 in parallel. The third filter unit F3 is configured by a connection body in which a third reactor L3 and a third capacitor C3 are connected in series being inserted in the first power wiring WP1 in series.

According to the present embodiment as well, internal connection lines of the two filters 216 are connected by the wiring W1. Specifically, the connection lines between the third reactor L3 and the third capacitor C3 connected to the output node Nout are connected by the wiring W1. Consequently, in addition to effects similar to those according to the first embodiment being achieved, variations in the current value and transient characteristics of the output current of the filters 216 can be suppressed even in cases in which differences occur in the current value and transient characteristics of the output current of the two inverters 14 provided in the power output circuit OC2.

According to the second embodiment described above, effects similar to those according to the above-described embodiment are achieved. Furthermore, variations in the current value and transient characteristics of the output current of the filters 216 can be suppressed even in cases in which differences occur in the current value and transient characteristics of the output current of the two inverters 14 provided in the power output circuit OC2.

### C. Third embodiment

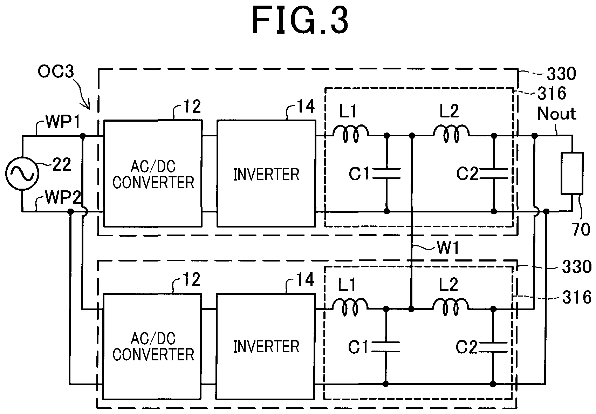

As shown in Fig. 3, a circuit block 330 provided in a power output circuit OC3 according to a present embodiment having an alternating current-to-direct current (AC/DC) converter 12 in addition to a filter 316 and the inverter 14 differs from the second embodiment. In addition, the filter 316 according to the present embodiment being configured as a fourth-order filter differs from the above-described embodiments. Configurations identical to those according to the above-described embodiments are given the same reference numbers. Detailed descriptions are omitted as appropriate.

The power output circuit OC3 according to the present embodiment includes two circuit blocks 330 that are provided in the first power wiring WP1 and the second power wiring WP2 to which alternating current power outputted from the alternating current power supply 22 is inputted, and are connected to each other in parallel. According to the present embodiment, the circuit block 330 includes the AC/DC converter 12, the inverter 14, and the filter 316. The filter 316 is disposed in the last post-stage of the circuit block 330.

The AC/DC converter 12 converts the alternating current power outputted from the alternating current power supply 22 to a direct current voltage of a target voltage value and supplies the direct current voltage to the inverter 14. The filter 316 is configured as a fourth-order filter. Specifically, a connection body in which a first reactor L1 and a second reactor L2 are connected in series is inserted in the first power wiring WP1 in series. A first capacitor C1 is inserted between the first reactor L1 and the second reactor L2 in parallel with the alternating current power supply 22. A second capacitor C2 is inserted following the second reactor L2 in parallel with the alternating current power supply 22.

According to the present embodiment as well, the internal connection lines of the two filters 316 are connected by the wiring W1. Specifically, the connection lines between the first capacitor C1 and the second reactor L2 connected to the output node Nout are connected by the wiring W1. Consequently, in addition to effects similar to those according to the above-described embodiments being achieved, variations in the current value and transient characteristics of the output current of the filters 316 can be suppressed even in cases in which differences occur in the current value of the output current of the two AC/DC converters 12 provided in the power output circuit OC2.

According to the third embodiment described above, effects similar to those according to the above-described embodiments are achieved. Furthermore, variations in the current value and transient characteristics of the output current of the filters 316 can be suppressed even in cases in which differences occur in the output current of the two AC/DC converters 12 provided in the power output circuit OC2.

### D. Fourth embodiment

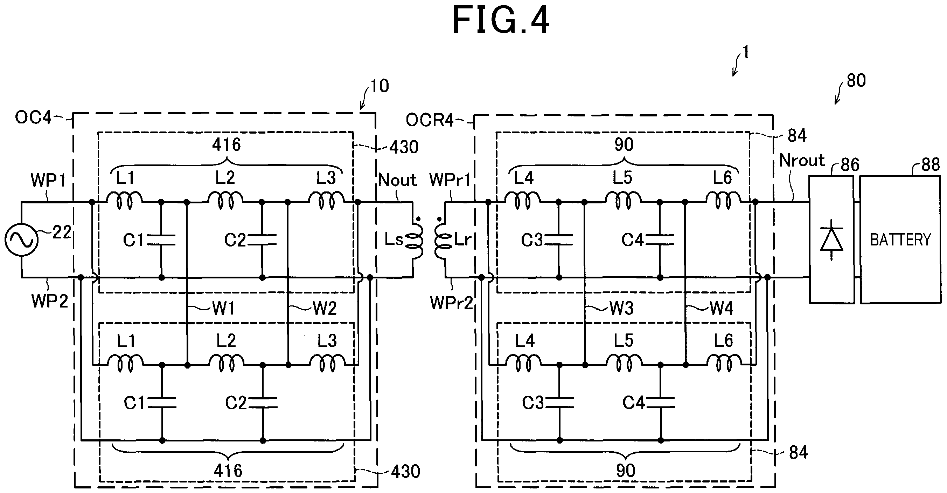

As shown in Fig. 4, according to a present embodiment, a power output circuit OC4 and a reception-side power output circuit OCR4 serving as a power output circuit are incorporated in a contactless power supply system 1. As shown in Fig. 4, the contactless power supply system 1 includes a power transmission apparatus 10 and a power reception apparatus 80. The power transmission apparatus 10 supplies power to the power reception apparatus 80 without contact.

The power output circuit OC4 includes two circuit blocks 430 connected to each other in parallel. Each circuit block 430 includes a filter 416. The filter 416 according to the present embodiment is configured as a fifth-order filter, unlike the above-described embodiments. Configurations identical to those according to the above-described embodiments are given the same reference numbers. Detailed descriptions are omitted as appropriate

The filter 416 attenuates a harmonic component that is a noise component of high-frequency power that is high-frequency alternating current power inputted from the alternating current power supply 22, allows passage of power in a target frequency band, and supplies the power to a power transmission coil Ls. Here, according to the present embodiment, high frequency refers to power at a frequency of 1 kHz or higher. In the filter 416, a connection body in which a first reactor L1, a second reactor L2, and a third reactor L3 are connected in series is inserted in the first power wiring WP1. In addition, a first capacitor C1 is connected between the first reactor L1 and the second reactor L2 in parallel with the alternating current power supply 22, and a second capacitor C2 is connected between the second reactor L2 and the third reactor L3 in parallel with the alternating current power supply 22. The power transmission coil Ls is connected in the post-stage of the circuit block 430.

The power reception apparatus 80 includes a power reception coil Lr, the reception-side power output circuit OCR4, a rectifier circuit 86, and a battery 88. When the power reception coil Lr is disposed in a position enabling magnetic coupling with the power transmission coil Ls, electromotive force is generated in the power reception coil Lr as a result of electromagnetic induction due to magnetic flux generated by the power transmission coil Ls. The electromotive force generated in the power reception coil Lr is inputted to the first power wiring WPr1 and the second power wiring WPr2 serving as power wirings.

The reception-side power output circuit OCR4 is disposed in a first power wiring WPr1 and a second power wiring WPr2. The reception-side power output circuit OCR4 includes two circuit blocks 84 connected to each other in parallel. Each circuit block 84 includes a filter 90. According to the present embodiment, the filter 90 is configured as a fifth-order filter that includes a fourth reactor L4, a fifth reactor L5, a sixth reactor L6, a third capacitor C3, and a fourth capacitor C4. The filter 90 attenuates a harmonic component of alternating current power inputted from the power reception coil Lr.

The rectifier circuit 86 converts the inputted alternating current power to direct current power and supplies the direct current power to the battery 88. When power is supplied to the power reception apparatus 80, the power transmission coil Ls and the power reception apparatus 80 can be considered to be loads

According to the present embodiment as well, the internal connection lines of the two filters 416 are connected by the wiring W1 and the wiring W2. Specifically, the connection lines between the second capacitor C2 and the third reactor L3 connected to the output node Nout are connected by the wiring W2. The connection lines between the second reactor L2 and the first capacitor C1 are connected by the wiring W1. Consequently, variations in the current value and transient characteristics of the output current of the filters 416 can be suppressed even in cases in which variations occur in the inductance of the reactors and the capacitance of the capacitors.

Similarly, the internal connection lines of the two filters 90 provided in the power reception apparatus 80 are connected by a wiring W3 and a wiring W4. Specifically, the connection lines between the fourth capacitor C4 and the sixth reactor L6 connected to the output node Nout of the reception-side power output circuit OCR4 are connected by the wiring W4. In addition, the connection lines between the third capacitor C3 and the fifth reactor L5 are connected by the wiring W3. Consequently, in a manner similar to the power output circuit OC4, variations in the current value and transient characteristics of the output current of the filters 90 can be suppressed even in cases in which variations occur in the inductance of the reactors and the capacitance of the capacitors.

According to the fourth embodiment described above, effects similar to those according to the above-described embodiments are achieved. In addition, as a result of the power transmission apparatus 10 including the power output circuit OC4, harmonic noise of power transmitted through the first power wiring WP1 and the second power wiring WP2 can be attenuated. Furthermore, as a result of the power reception apparatus 80 including the reception-side power output circuit OCR4, harmonic noise of power transmitted through the first power wiring WPr1 and the second power wiring WPr2 can be attenuated. Consequently, the contactless power supply system 1 in which emission of harmonic noise is appropriately attenuated can be provided.

### E. Fifth embodiment

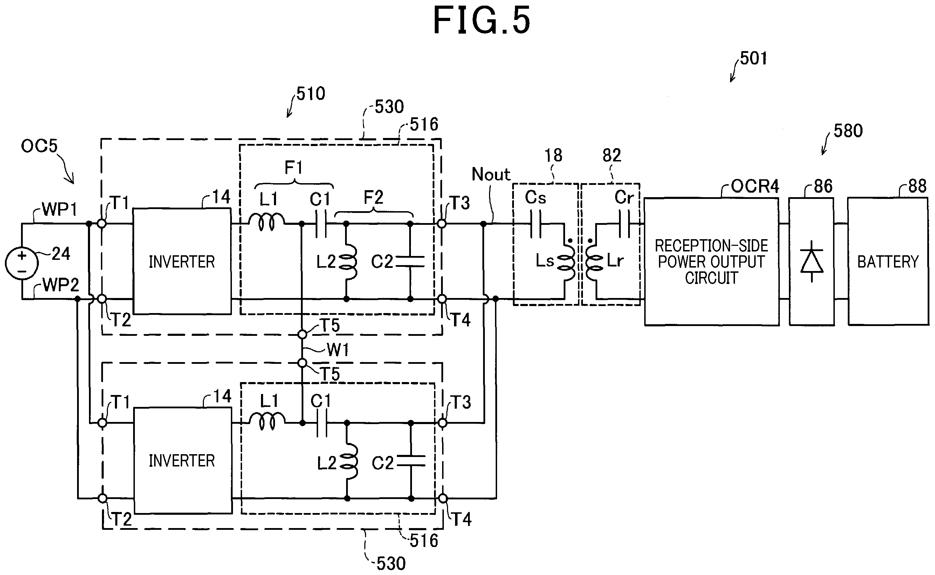

As shown in Fig. 5, a present embodiment is identical to the fourth embodiment in that a power output circuit OC5 and a reception-side power output circuit OCR5 are incorporated in a contactless power supply system 501. In addition, the present embodiment differs from the fourth embodiment in terms of a circuit block 530 according to the present embodiment having the inverter 14, a transmission resonance circuit 18 being provided, and a circuit configuration of a filter 516. Furthermore, a power reception apparatus 580 according to the present embodiment differs from the fourth embodiment in terms of having a reception resonance circuit 82. Configurations identical to those according to the above-described embodiments are given the same reference numbers. Detailed descriptions are omitted as appropriate

The circuit block 530 according to the present embodiment includes the inverter 14 in a manner similar to the second embodiment. The filter 516 is a combination filter of a bandpass filter and a band elimination filter. Specifically, the filter 516 is configured such that a first filter unit F1 that is a bandpass filter and a second filter unit F2 that is a band elimination filter are connected in this order.

The transmission resonance circuit 18 is a resonance circuit in which a transmission resonance capacitor Cs and the power transmission coil Ls are connected in series. The transmission resonance circuit 18 enters a resonant state at a fundamental frequency of the alternating current power outputted from the inverter 14. According to the present embodiment, the fundamental frequency is 85 kHz.

The reception resonance circuit 82 is a resonance circuit in which the power reception coil Lr and a reception resonance capacitor Cr are connected in series. When the power transmission coil Ls and the power reception coil Lr are magnetically coupled, a resonance frequency of the transmission resonance circuit 18 and a resonance frequency of the reception resonance circuit 82 are set to be substantially the same. Consequently, contactless power supply from the power transmission apparatus 510 to the power reception apparatus 580 can be performed by magnetic resonance between the power transmission coil Ls and the power reception coil Lr.

According to the present embodiment, the power reception apparatus 580 is mounted in a vehicle (not shown). The battery 88 is a secondary battery that outputs direct current power to drive a driving motor that is a driving source of the vehicle. The transmission resonance circuit 18 provided in the power transmission device 10 is set in a road on which the vehicle travels.

According to the present embodiment as well, internal connection lines of the two filters 516 are connected by the wiring W1. Specifically, the connection lines between a first reactor L1 and a first capacitor C1 connected to the output node Nout are connected by the wiring W1. As a result, effects similar to those according to the above-described embodiments are achieved

According to the present embodiment, each circuit block 530 is unitized. Specifically, in the circuit block 530, electronic elements configuring the inverter 14 and the filter 516 are fixed to a substrate, and external connection terminals T1 to T5 are provided on the substrate. The external connection terminal T1 and the external connection terminal T3 are provided in the first power wiring WP1. The external connection terminal T2 and the external connection terminal T4 are provided in the second power wiring WP2. The external connection terminal T1 and the external connection terminal T2 are input-side terminals of the circuit block 530, and the external connection terminal T3 and external connection terminal T4 are output-side terminals of the circuit block 530. The external connection terminal T5 is provided in the wiring W1.

When the power transmission system 510 is set in the road, the direct current power supply 24, the unitized circuit block 530, and the transmission resonance circuit 18 are individually disposed. The direct current power supply 24 and the circuit block 530, and the circuit block 530 and the transmission resonance circuit 18 are each connected by power wirings. Here, the circuit block 530 may be configured to be disposed inside a housing (not shown), and the external connection terminals T1 to T5 may be exposed from the housing.

According to the present embodiment, under an assumption that the direct current power supply 24 includes sufficient power supply capacity, power supply capacity of the power transmission apparatus 510 can be flexibly changed as a result of the circuit block 520 having the inverter 14. Specifically, when power supplied from the power transmission apparatus 510 to the transmission resonance circuit 18 is to be increased, the supply capacity can be increased by a new circuit block 530 being added in parallel to the circuit block 530 that is already set. Conversely, when the power supplied by the power transmission apparatus 510 is to be reduced, the supply capacity can be reduced by a portion of the plurality of circuit blocks 530 that are already set being removed. According to the present embodiment, because the circuit block 530 is unitized, the power wirings for input and the power wirings for output of the circuit block 530 can be easily connected or disconnected using the external connection terminals T1 to T5 provided in advance. In addition, because the circuit block 530 is unitized, circuit constants of the inverter 14 and the filter 516 provided in the circuit block 530 can be optimized.

Here, advantages of the circuit block 530 being unitized are not limited to when the power transmission apparatus 510 is set. According to the present embodiment, a case in which the power reception apparatus 580 is mounted in a vehicle is given as an example. However, an object in which the power reception apparatus 580 is mounted is not limited to the vehicle and may be other moving bodies such as an autonomous guided vehicle (AGV). In addition, a magnitude of power supplied without contact by the contactless power supply system 501 varies depending on the object in which the power reception apparatus 580 is mounted. When the circuit blocks 530 are manufactured to individually accommodate the various magnitudes of power supplied without contact, a large variety of circuit blocks 530 are required to be prepared. In this regard, according to the present embodiment, the various magnitudes of power supplied without contact can be accommodated through increase and decrease of the number of circuit blocks 530, without a large variety of circuit blocks 530 being prepared.

According to the fifth embodiment described above, effects similar to those according to the above-described embodiments are achieved. Furthermore, as a result of the power transmission apparatus 510 including the transmission resonance capacitor Cs and the power reception apparatus 580 including the reception resonance capacitor Cs, contactless power supply can be performed by magnetic field resonance. In addition, as a result of the circuit block 530 having the inverter 14 and the circuit block 530 being unitized, under an assumption that the direct current power supply 24 includes sufficient power supply capacity, the power supply capacity of the power transmission apparatus 510 can be flexibly changed.

### F. Sixth embodiment

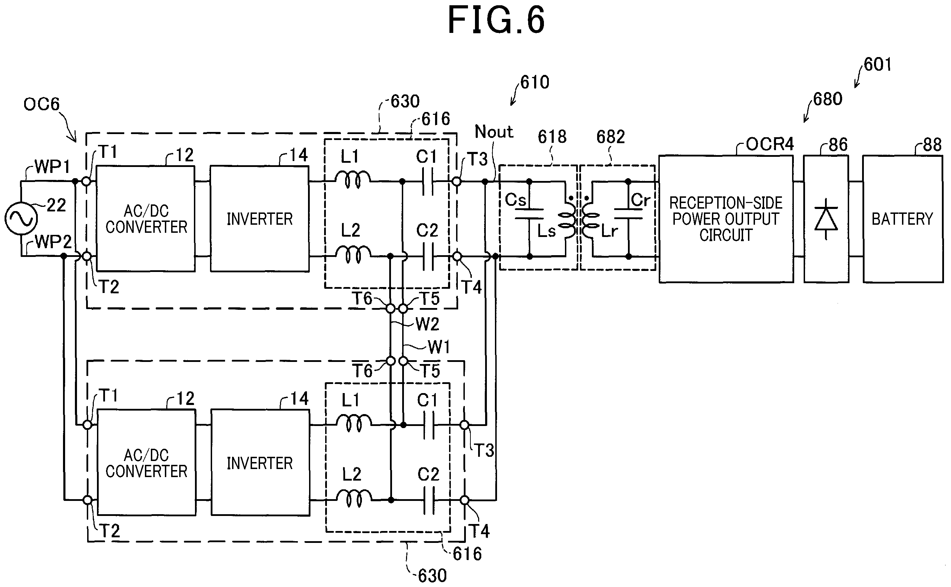

As shown in Fig. 6, a power transmission apparatus 610 provided in a contactless power supply system 601 according to a present embodiment having the AC/DC converter 12, a circuit configuration of a filter 616, and a circuit configuration of a transmission resonance circuit 618 differ from the fifth embodiment. In addition, a circuit configuration of a reception resonance circuit 682 according to the present embodiment differs from the fifth embodiment. Configurations identical to those according to the above-described embodiments are given the same reference numbers. Detailed descriptions are omitted as appropriate

A circuit block 630 according to the present embodiment includes the AC/DC converter 12 in a manner similar to the third embodiment. A filter 616 is a balanced-type bandpass filter. Specifically, a first connection body in which a first reactor L1 and a first capacitor C1 are connected in series is provided in the first power wiring WP1, and a second connection body that is a connection body similar to the first connection body and in which a second reactor L2 and a second capacitor C2 are connected in series is provided in the second power wiring WP2. Through use of the balanced type, common mode noise can be reduced.

According to the present embodiment as well, internal connection lines of the two filters 616 are connected by the wiring W1 and the wiring W2. Specifically, connection lines between the first reactor L1 and the first capacitor C1 connected to the output node Nout are connected by the wiring W1. In addition, according to the present embodiment, a connection line between the second reactor L2 of the second connection body provided in the second power wiring WP2 and the first capacitor C1 in one filter 616 is connected to a connection line between the second reactor L2 and the second capacitor C2 of the second connection body provided in the second power wiring WP2 in the remaining other filter 616. Specifically, the connection lines between the second reactor L2 and the second capacitor C2 are connected by the wiring W2. The wiring W1 and the wiring W2 are disposed near each other. According to the present embodiment, the wiring W1 and the wiring W2 are twisted together. As a result, because the wiring W1 and the wiring W2 form a pair, wiring inductance can be reduced and a potential difference between the connection lines can be further eliminated. Therefore, variations in the current value and transient characteristics of the output current of the filters 616 can be suppressed. Furthermore, because each line includes a balanced configuration, common mode noise can be further reduced.

The transmission resonance circuit 618 according to the present embodiment being a resonance circuit in which the transmission resonance capacitor Cs and the power transmission coil Ls are connected in parallel differs from the fifth embodiment. In addition, the reception resonance circuit 682 according to the present embodiment being a resonance circuit in which the reception resonance capacitor Cr and the power reception coil Lr are connected in parallel differs from the fifth embodiment. Although the configuration differs, the contactless power supply system 1 is capable of performing contactless power supply by magnetic field resonance between the power transmission coil Ls and the power reception coil Lr in a manner similar to the fifth embodiment by having the transmission resonance circuit 618 and the reception resonance circuit 682.

According to the present embodiment as well, the circuit block 630 is unitized. Here, according to the present embodiment, unlike the fifth embodiment, the power output circuit OC6 includes the wiring W2 in addition to the wiring W1 and therefore includes an external connection terminal T6 provided in the wiring W2 in addition to the external connection terminals T1 to T5. As a result of the circuit block 630 being unitized, the power supply capacity of the power transmission apparatus 610 can be flexibly changed. In addition, because the circuit block 630 is unitized, circuit constants of the AC/DC converter 12, the inverter 14 and the filter 516 provided in the circuit block 630 can be optimized.

According to the present embodiment, under an assumption that the alternating current power supply 22 includes sufficient power supply capacity, power supply capacity of the power transmission apparatus 610 can be flexibly changed in a manner similar to that according to the fifth embodiment as a result of the circuit block 630 having the AC/DC converter 12 and the inverter 14. That is, when power supplied from the power transmission apparatus 610 is to be increased, a new circuit block 630 is added. When power supplied from the power transmission apparatus 610 is to be decreased, the circuit block 630 is removed. Supply capacity can thereby by increased and decreased.

According to the sixth embodiment described above, effects similar to those according to the above-described embodiments are achieved. Furthermore, as a result of the circuit block 630 having the AC/DC converter 12 and the circuit block 630 being unitized, under an assumption that the alternating current power supply 22 includes sufficient power supply capacity, the power supply capacity of the power transmission apparatus 610 can be flexibly changed.

### G. Seventh embodiment

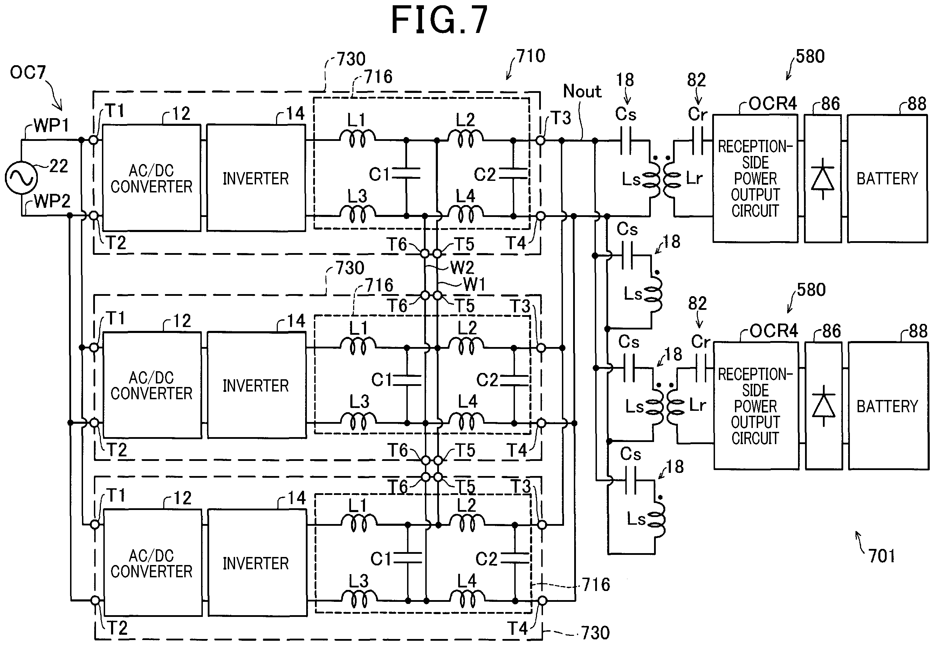

As shown in Fig. 7, a contactless power supply system 701 according to a present embodiment differs from the sixth embodiment in terms of a number of circuit blocks 730, a number of transmission resonance circuits 18, and a configuration of a filter 716. Configurations identical to those according to the above-described embodiments are given the same reference numbers. Detailed descriptions are omitted as appropriate.

According to the present embodiment, a power transmission apparatus 710 includes three circuit blocks 730. The filter 716 is a balanced-type filter. Specifically, a first connection body that includes a first reactor L1 and a second reactor L2 connected to each other in series, and a first capacitor C1 connected between the first reactor L1 and the second reactor L2 in parallel with the alternating current power supply 22 is provided in the first power wiring WP1. A second connection body that is a connection body equivalent to the first connection body and includes a third reactor L3 and a fourth reactor L4 connected to each other in series, and a first capacitor C1 connected between the third reactor L3 and the fourth reactor L4 in parallel is provided in the second power wiring WP2. A second capacitor C2 is connected following the fourth reactor L4 in parallel with the alternating current power supply 22. Through use of the balanced type, common mode noise can be reduced.

In a manner similar to the sixth embodiment, internal connection lines of the three filters 616 are connected by the wiring W1 and the wiring W2. Specifically, connection lines between the first reactor L1 and the second reactor L2 connected to the output node Nout of the three filters 616 are connected by the wiring W1. Connection lines between the third reactor L3 and the fourth reactor L4 of the three filters 616 are connected by the wiring W2. The wiring W1 and the wiring W2 are disposed near each other. As a result, variations in the current value and transient characteristics of the output current of the filters 716 can be suppressed. In addition, because the wiring W1 and the wiring W2 form a pair, common mode noise can be further reduced.

According to the present embodiment, the power transmission apparatus 710 includes four transmission resonance circuits 18. The four transmission resonance circuits 18 are connected to each other in parallel. According to the present embodiment, an example is given in which contactless power supply is performed to a plurality of power reception apparatuses 580 using a plurality of transmission resonance circuits 18 to which power is supplied from the same alternating current power supply 22. When contactless power supply to the plurality of power reception apparatuses 580 is performed, a magnitude of output power of the power output circuit OC7 is greater than that when contactless power supply to a single power reception apparatus 580 is performed. In such cases, as described above, the magnitude of output power of the power transmission apparatus 710 can be adjusted by the circuit block 730 being increased. According to the seventh embodiment described above, effects similar to those according to the above-described embodiments are achieved.

### H. Eighth embodiment

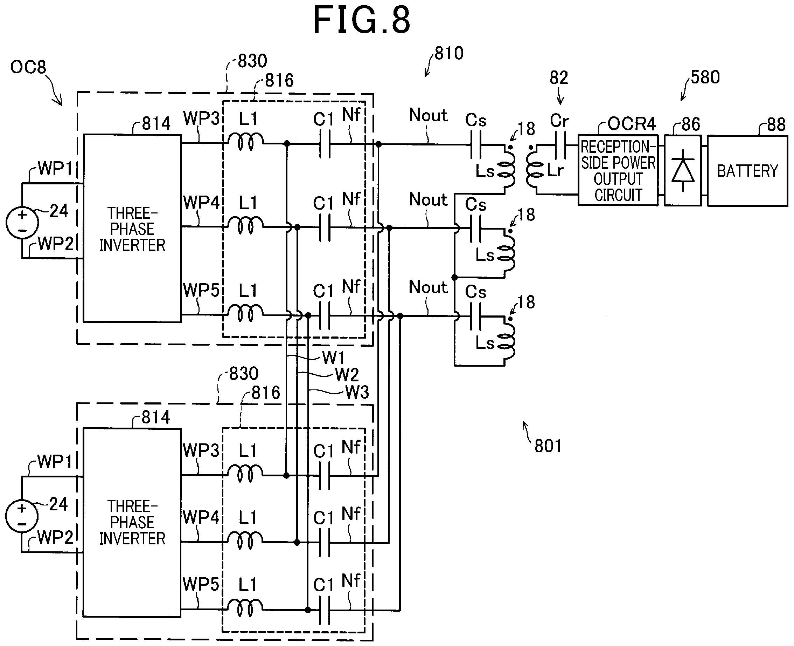

As shown in Fig. 8, a power transmission apparatus 810 of a contactless power supply system 801 according to a present embodiment having a three-phase inverter 814 differs from the fifth embodiment. Configurations identical to those according to the above-described embodiments are given the same reference numbers. Detailed descriptions are omitted as appropriate.

A circuit block 830 provided in a power output circuit OC8 according to the present embodiment includes the three-phase inverter 814. The three-phase inverter 814 converts direct current power inputted from the direct current power supply 24 to three-phase alternating current power and outputs the three-phase alternating current power to a third power wiring WP3, a fourth power wiring WP4, and a fifth power wiring WP5 serving as power wirings.

Two circuit blocks 830 are connected to each other side by side. Here, the two circuit blocks 830 being connected side by side also includes, in addition to the case in which the two circuit blocks 830 are connected in parallel as according to the above-described embodiments, a case in which, as according to the present embodiment, a plurality of circuit blocks 830 are connected such that the output nodes Nf of the circuit blocks 830 from which the alternating current power of the same phase is outputted are connected and the alternating current power outputted from the circuit blocks 830 merge.

A filter 816 is disposed in the third power wiring WP3, the fourth power wiring WP4, and the fifth power wiring WP5. Specifically, a connection body in which a first reactor L1 and a first capacitor C1 are connected in series is inserted in each of the third power wiring WP3, the fourth power wiring WP4, and the fifth power wiring WP5. Power is supplied to the transmission resonance circuit 18 through any two power wirings among the third power wiring WP3, the fourth power wiring WP4, and the fifth power wiring WP5.

According to the present embodiment as well, internal connection lines of the two filters 816 are connected by the wiring W1, the wiring W2, and the wiring W3. Specifically, connection lines between the first reactor L1 and the first capacitor C1 connected to the output node Nout provided in the third power wiring WP3 are connected by the wiring W1. Connection lines between the first reactor L1 and the first capacitor C1 provided in the fourth power wiring WP4 are connected by the wiring W2. Connection lines between the first reactor L1 and the first capacitor C1 provided in the fifth power wiring WP5 are connected by the wiring W3. As a result, variations in the current value and transient characteristics of the output current of the filters 816 can be suppressed. According to the eighth embodiment described above, effects similar to those according to the above-described embodiments are achieved.

### I. Ninth embodiment

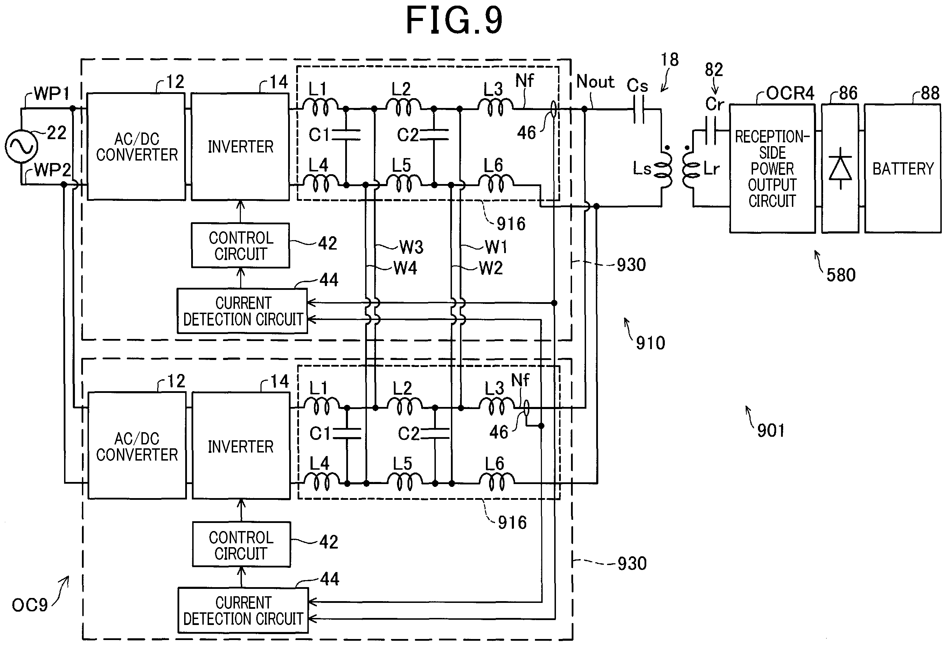

As shown in Fig. 9, a power transmission apparatus 91 provided in a contactless power supply system 901 according to the present embodiment further having a control circuit 42 serving as a control unit, a current detection circuit 44, and a current sensor 46, and a circuit configuration of a filter 916 differ from the sixth embodiment. The control circuit 42 and the current detection circuit 44 are actualized by an electronic circuit. Configurations identical to those according to the first embodiment are given the same reference numbers. Detailed descriptions are omitted as appropriate.

The filter 916 provided in a circuit block 930 provided in a power output circuit OC9 according to the present embodiment is a balanced-type filter. Specifically, a first connection body including a first reactor L1, a second reactor L2, and a third reactor L3 that are connected to one another in series, a first capacitor C1 connected between the first reactor L1 and the second reactor L2 in parallel with the alternating current power supply 22, and a second capacitor C2 connected between the second reactor L2 and the third reactor L3 in parallel with the alternating current power supply 22 is provided in the first power wiring WP1. In addition, a second connection body that is a connection body similar to the first connection body including a fourth reactor L4, a fifth reactor L5, and a sixth reactor L6 that are connected to one another in series, a first capacitor C1 connected between the fourth reactor L4 and the fifth reactor L5 in parallel with the alternating current power supply 22, and a second capacitor C2 connected between the fifth reactor L5 and the sixth reactor L6 in parallel with the alternating current power supply 22 is provided in the second power wiring WP2. Through use of the balanced type, common mode noise can be reduced.

In a manner similar to the sixth embodiment, internal connection lines of the two filters 916 are connected by the wiring W1, the wiring W2, the wiring W3, and the wiring W4. Specifically, connection lines between the second capacitor C2 and the third reactor L3 connected to the output node Nout are connected by the wiring W1. Connection lines between the sixth reactor L6 and the capacitor C2 are connected by the wiring W2. Connection lines between the first capacitor C1 and the second reactor L2 are connected by the wiring W3. Connection lines between the fifth reactor L5 and the first capacitor C1 are connected by the wiring W4. The wiring W1 and the wiring W2 are disposed near each other. The wiring W3 and the wiring W3 are disposed near each other. As a result, variations in the current value and transient characteristics of the output current of the filters 916 can be suppressed. In addition, common mode noise can be further reduced.

The current sensor 46 is disposed in the output node Nf of each of the two filters 916. The current sensor 46 detects the output current of each of the two filters 916 and inputs a signal indicating the magnitude of the current value to each of the two current detection circuits 44. The control circuit 42 controls a duty of a pulse width modulation (PWM) signal for controlling the inverter 14 so that a difference between the output current of one filter 916 and the output current of the remaining other filter 916 is reduced. Specifically, the current detection circuit 44 compares the signals indicating the magnitude of the current value inputted from the two current sensors 46 and inputs, to the control circuit 42, a signal indicating a current difference that is a difference in the current value of the output current of the two filters 916. The control circuit 42 adjusts an input signal to the inverter 14 so that the current difference is reduced using the signal inputted from the current detection circuit 44. Specifically, the control circuit 42 changes the duty of the PWM signal that is an input signal to a transistor configuring the inverter 14. For example, when the output current of one filter 916 is large, the duty of the PWM signal to the inverter 14 inputting power to the one filter 916 may be decreased. As a result, variations in the current value of the output current of the filters 916 can be further suppressed.

According to the ninth embodiment described above, effects similar to those according to the above-described embodiments are achieved. In addition, variations in the current value of the output current of the filters 916 can be further suppressed as a result of the current sensor 46, the current detection circuit 44, and the control circuit 42 being provided.

### J. Other embodiments

(J1) According to the fourth embodiment described above, the filter 90 included in the power reception apparatus 80 is a fifth-order filter identical to the filter 416 included in the power transmission apparatus 10. However, the configuration of the filter may differ between the power reception apparatus 80 and the power transmission apparatus 10. Regardless of the configuration of the filter, as a result of the power transmission apparatus 10 and the power reception apparatus 10 including the filters, noise components can be appropriately attenuated.

(J2) According to the first embodiment described above, the first reactor L1 and the first capacitor C1 are connected in series in this order between the alternating current power supply 22 and the load 70. The order of connection of the first reactor L1 and the first capacitor C1 may be reversed. Regardless of an electronic element connected to the first power wiring WP1 in series and having one terminal connected to the output node Nout being a reactor or a capacitor, as a result of the connection lines between the reactor and the capacitor being connected, imbalance in the output current of the filters can be suppressed.

(J3) According to the fourth embodiment described above, the filter 416 is provided in the pre-stage of the power transmission coil Ls of the power transmission apparatus 10 and the filter 90 is provided in the post-stage of the power reception coil Lr of the power reception apparatus 80. Other than this aspect, an aspect in which a filter is provided in only either of the pre-stage of the power transmission coil Ls and the post-stage of the power reception coil Lr is also possible.

The present disclosure is not limited to the above-described embodiments and variation examples, and can be actualized by various configurations without departing from the spirit of the disclosure. For example, technical features according to embodiments and variation examples that correspond to technical features in each aspect described in the summary of the invention can be replaced and combined as appropriate to solve some or all of the above-described issued or to achieve some or all of the above-described effects. Furthermore, the technical features may be omitted as appropriate unless described as a requisite in the present specification.

While the present disclosure has been described with reference to embodiments thereof, it is to be understood that the disclosure is not limited to the embodiments and constructions. The present disclosure is intended to cover various modification examples and modifications within the range of equivalency. In addition, various combinations and configurations, and further, other combinations and configurations including more, less, or only a single element thereof are also within the spirit and scope of the present disclosure.

The features of the present disclosure are as follows.

### (First aspect)

A power output circuit (OC1 to OC9, OCR4) including: a plurality of circuit blocks (30, 230 to 930) provided in power wirings (WP1 to WP5, WPr1, WPr2) to which power is inputted and connected to each other side by side, in which: each of the plurality of circuit blocks includes at least a filter (16, 90, 216 to 916) in a last post-stage; each of the plurality of filters includes a reactor (L1) and a capacitor (C1) connected to the reactor at a node differing from an output node (Nout); either of the reactor and the capacitor provided in each of the plurality of filters is connected to the power wirings in series so as to connect with the output node; and a connection line between the reactor and the capacitor in one filter is connected to a connection line between the reactor and the capacitor in the remaining other filter.

### (Second aspect)

A contactless power supply system (1, 501 to 901) including the power output circuit according to the first aspect, in which: the power output circuit is a circuit that outputs high-frequency power; the filter is a filter for attenuating a harmonic component of the power; the contactless power supply system includes a power transmission apparatus (10, 510 to 910) that includes a power transmission coil, and a power reception apparatus (80, 580) that includes a power reception coil to which power is supplied from the power transmission coil using electromagnetic inductance; and the power output circuit is provided in at least either of a pre-stage of the power transmission coil and a post-stage of the power reception coil.

### (Third aspect)

The contactless power supply system according to the second aspect, in which: the power transmission apparatus further includes a transmission resonance capacitor (Cs) that forms a transmission resonance circuit with the power transmission coil; and the power reception apparatus further includes a reception resonance capacitor (Cr) that forms a reception resonance circuit with the power reception coil.

### (Fourth aspect)

The power output circuit according to the first aspect, in which the filter is a bandpass filter.

### (Fifth aspect)

The power output circuit according to the first aspect, in which the filter is a combination filter of a bandpass filter and a band elimination filter.

### (Sixth aspect)

The power output circuit according to the first aspect, in which the filter is a fourth-order filter.

### (Seventh aspect)

The power output circuit according to the first aspect, in which the filter is a fifth-order filter.

### (Eighth aspect)

The power output circuit according to the first aspect, in which: the power wirings include a first power wiring (WP1) and a second power wiring (WP2); a first connection body including the reactor and the capacitor is provided in the first power wiring; the filter is a balanced-type filter having a second connection body equivalent to the first connection body in the second power wiring; and a connection line between the reactor and the capacitor of the second connection body provided in the second power wiring in one filter is connected to a connection line between the reactor and the capacitor of the second connection body provided in the second power wiring in the remaining other filter.

### (Ninth aspect)

The contactless power supply system according to the third aspect, in which: the power transmission apparatus further includes an alternating current-to-direct current converter (12) that converts alternating current power to direct current power and outputs the direct current power; the power output circuit is provided in a pre-stage of the power transmission coil that is a post-stage of the alternating current-to-direct current converter; each of the plurality of circuit blocks includes an inverter (14) that converts the direct current power to the high-frequency power and outputs the high-frequency power to the filter; and each of the plurality of circuit blocks is unitized.

### (Tenth aspect)

The contactless power supply system according to claim 3, in which: the power output circuit is provided in a pre-stage of the power transmission coil; each of the plurality of circuit blocks includes an alternating current-to-direct current converter (12) that converts alternating current power to direct current power and outputs the direct current power and an inverter (14) that converts the direct current power to the high-frequency power and outputs the high-frequency power to the filter; and each of the plurality of circuit blocks is unitized.

### (Eleventh aspect)

The contactless power supply system according to the ninth or tenth aspect, in which: the power transmission apparatus further includes: a plurality of current sensors (46) that detect an output current of each of the plurality of filters; and a control unit (42) that controls a duty of a pulse width modulation signal for controlling the inverter so that a difference between the output current of one filter and the output current of the remaining other filter is reduced, using a plurality of output currents detected by the plurality of current sensors.

## Claims

1. A power output circuit (OC1 to OC9, OCR4) comprising:
a plurality of circuit blocks (30, 230 to 930) provided in power wirings (WP1 to WP5, WPr1, WPr2) to which power is inputted and connected to each other side by side, wherein:
each of the plurality of circuit blocks includes at least a filter (16, 90, 216 to 916) in a last post-stage;
each of the plurality of filters includes a reactor (L1) and a capacitor (C1) connected to the reactor at a node differing from an output node (Nout);
either of the reactor and the capacitor provided in each of the plurality of filters is connected to the power wirings in series so as to connect with the output node; and
a connection line between the reactor and the capacitor in one filter is connected to a connection line between the reactor and the capacitor in the remaining other filter.

2. A contactless power supply system (1, 501 to 901) including the power output circuit according to claim 1, wherein:
the power output circuit is a circuit that outputs high-frequency power;
the filter is a filter for attenuating a harmonic component of the power;
the contactless power supply system comprises
a power transmission apparatus (10, 510 to 910) that includes a power transmission coil, and a power reception apparatus (80, 580) that includes a power reception coil to which power is supplied from the power transmission coil using electromagnetic inductance; and
the power output circuit is provided in at least either of a pre-stage of the power transmission coil and a post-stage of the power reception coil.

3. The contactless power supply system according to claim 2, wherein:
the power transmission apparatus further includes a transmission resonance capacitor (Cs) that forms a transmission resonance circuit with the power transmission coil; and
the power reception apparatus further includes a reception resonance capacitor (Cr) that forms a reception resonance circuit with the power reception coil.

4. The power output circuit according to claim 1, wherein
the filter is a bandpass filter.

5. The power output circuit according to claim 1, wherein
the filter is a combination filter of a bandpass filter and a band elimination filter.

6. The power output circuit according to claim 1, wherein
the filter is a fourth-order filter.

7. The power output circuit according to claim 1, wherein
the filter is a fifth-order filter.

8. The power output circuit according to claim 1, wherein:
the power wirings include a first power wiring (WP1) and a second power wiring (WP2);
a first connection body including the reactor and the capacitor is provided in the first power wiring;
the filter is a balanced-type filter having a second connection body equivalent to the first connection body in the second power wiring; and
a connection line between the reactor and the capacitor of the second connection body provided in the second power wiring in one filter is connected to a connection line between the reactor and the capacitor of the second connection body provided in the second power wiring in the remaining other filter.

9. The contactless power supply system according to claim 3, wherein:
the power transmission apparatus further includes an alternating current-to-direct current converter (12) that converts alternating current power to direct current power and outputs the direct current power;
the power output circuit is provided in a pre-stage of the power transmission coil that is a post-stage of the alternating current-to-direct current converter;
each of the plurality of circuit blocks includes
an inverter (14) that converts the direct current power to the high-frequency power and outputs the high-frequency power to the filter; and
each of the plurality of circuit blocks is unitized.

10. The contactless power supply system according to claim 3, wherein:
the power output circuit is provided in a pre-stage of the power transmission coil;
each of the plurality of circuit blocks includes
an alternating current-to-direct current converter (12) that converts alternating current power to direct current power and outputs the direct current power and
an inverter (14) that converts the direct current power to the high-frequency power and outputs the high-frequency power to the filter; and
each of the plurality of circuit blocks is unitized.

11. The contactless power supply system according to claim 9 or 10, wherein:
the power transmission apparatus further includes:
a plurality of current sensors (46) that detect an output current of each of the plurality of filters; and
a control unit (42) that controls a duty of a pulse width modulation signal for controlling the inverter so that a difference between the output current of one filter and the output current of the remaining other filter is reduced, using a plurality of output currents detected by the plurality of current sensors.
